# EUROPEAN PATENT APPLICATION

(11) **EP 2 463 456 A1**
(43) Date of publication of application: **13.06.2012**
(21) Application number: 10806082.3
(22) Date of filing: 23.06.2010
(51) Int. Cl.: E04F 11/00, E04F 11/02, A61G 3/06, B65G 69/30, E04C 2/40, E06C 1/38

(54) **ADJUSTABLE RAMP LADDER WITH ALTERNATING STEPS**

(30) Priority: 06.08.2009 ES 200930566
(71) Applicant: Gomez Varela, Vicente Miguel, 28032 Madrid (ES)
(72) Inventor: Gomez Varela, Vicente Miguel, 28032 Madrid (ES)
(74) Representative: PROPI, S.L.
(86) International application number: PCT/ES2010/070421
(87) International publication number: WO 2011/015695

(57) **Abstract**

Adjustable ramp ladder with alternating steps comprising at least a first set (1) comprising a plurality of in line plates (11, 12, 13), said plates (11, 12, 13) being joined by the adjacent sides thereof and a second set (2) comprising a plurality of in line plates (21, 22, 23), said plates (21, 22, 23) being joined by the adjacent sides thereof in such a way that the sets (1, 2) are joined in parallel, by means of transverse cylindrical bars (3, 3', 3"), which intersect the internal mid-point of the ends of each plate (11-21, 12-22 and 13-23), and which allow each set (1, 2) to be joined.

## Description

### Object of the invention

The present invention relates to an adjustable ramp-ladder with alternating steps, comprising two sets with a plurality of plates, the base of which forms a regular polygon, transversely joined by joined bars, so that the length of the steps can be varied, even converting it into a ramp for the ascent or descent of wheelchairs, luggage and the like.

### Background of the invention

The problems that ladders, steps, slopes and others cause when having to overcome them by wheelchairs, luggage and the like are well known. Also on site, in the construction of buildings, provisional ladders, which are not too safe, are applied. In this regard the utility model U9801212 is known, for example, consisting of an improved ladder step, which is determined from an independent set provided with means of attachment to a surface, essentially in ramp, comprising an attachment base where one of its cross-cutting edges of a seating platform is jointly attached, while the other even cross-cutting edge on that platform is attached, also jointly to a central support, which is linked to the base by at least one coupling mechanism; all this in order to situate the seating platform in a roughly horizontal position during the use of the step.

However, ladders adjustable as ramp or ladders which comply with the function, technical features and advantages offered by the invention described here are not known.

### Description of the invention

The present invention consists of an adjustable ramp-ladder with alternating steps, which allows its conversion into a ladder or ramp based on the needs. It is an innovative system, which through the configuration of different plates can produce steps of different heights, by changing the slope and it even allows lifting luggage, wheelchairs or the like through it.

The invention comprises a plurality of in line plates, joined in their longitudinal ends, in a way that allows the variation of the slope of the ramp or the height of the steps. These in line plates are joined to other in line plate(s), only by transverse bars, from the end of the plate to the end of the other adjacent one. Thus, in the case of more than two lines of plates, the transverse bars intersect every plate from end to end.

In this way the ramp ladder described here comprises at least two sets of in line plates, with a plurality of joined plates each set, and joined, only by transverse bars, arranged through the interior of the plates. In this way, and thanks on the one hand, to the linkage of the plates, and on the other hand, to the coupling of each plate to the adjacent one by a single centered point, the ramp-ladder is configured according to the needs. In this way, a ladder with steps of different heights or the same height, a ramp for lifting wheelchairs or the like, or even a combination of ramp and ladder can be obtained.

This is also a modular system that adapts to the size of the place where it is installed, and allows adding more or fewer sets of plates until obtaining the desired size.

Every plate of the sets is the same size and shape. The shape of the plate is preferably quadrangular or hexagonal, but it is susceptible of application for any shape of regular polygon. When the shape of the plates is quadrangular there are no spaces between the adjacent plates from different sets, but when the shape is different, e.g. hexagonal, there are spaces between the sets. To eliminate these gaps, and in order to be able to create a ramp without spaces between each of them, a means of attachment is arranged, as a rhomboid net, which does not restrict the movements of the plates, such that the existing gaps are eliminated.

### Description of the drawings

To complete the description that is being made and with the object to help to a better understanding of the features of the invention, according to a preferred example of practical embodiment of the same, is accompanied as an integral part of said description, a set of drawings wherein with illustrative character and without limitation, the following has been represented:

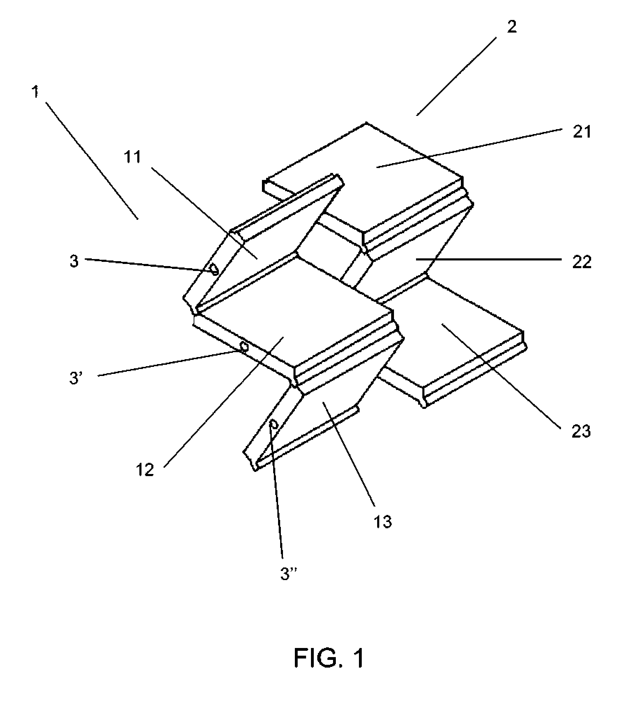

Figure 1.- shows a perspective view of a preferred embodiment of the invention, where there are two sets (1, 2) of in line plates (11, 12, 13, 21, 22, 23), transversely joined by bars (3, 3', 3"), and where the base shape of every plate is quadrangular.

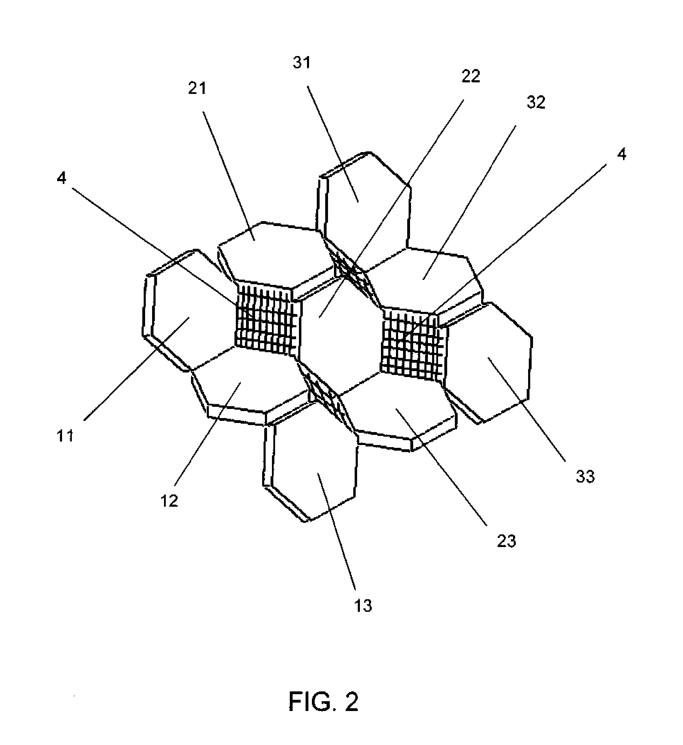

Figure 2.- shows a perspective view of a preferred embodiment of the invention, where as in the figure mentioned above there are two sets of plates that form the ramp ladder of the invention, but in this case with the difference that the base shape of every plate is hexagonal. It is also shown that in the gaps between the sets (1, 2) there has been arranged a jointed means (4).

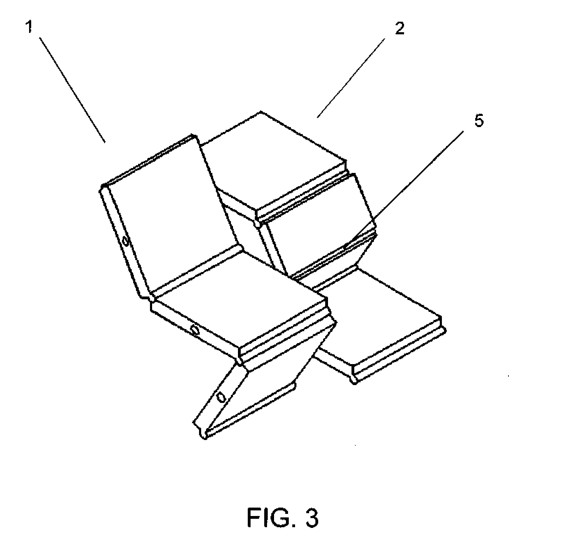

Figure 3.- shows a perspective view of a preferred embodiment of the invention, similar to the one of figure 1, where it is seen as the only difference the existence of a joint (5) in the transverse half of a plate base (22), so that it allows the variation of the height of the steps and the slope of the ramp.

### Preferred embodiment of the invention

The invention consists of an adjustable ramp ladder with alternating steps, comprising at least one first set (1) with a plurality of in line plates (11, 12, 13), said plates (11, 12, 13) being joined by the adjacent sides thereof, and a second set (2) comprising a plurality of in line plates (21, 22, 23), said plates (21, 22, 23) being joined by the adjacent sides thereof. The sets (1, 2) are joined in parallel, e.g. through transverse cylindrical bars (3, 3', 3"), that intersect the internal mid-point of every plate (11-21, 12-22 and 13-23) by their ends, and which allow the linkage of each set (1, 2).

All the plates (11, 12, 13, 21, 22, 23) are the same shape and size. In addition, the base shape of every plate (11, 12, 13, 21, 22, 23) is a regular polygon. This regular polygon can be square, so that between the union of two sets (1, 2) there are no spaces, because each of the adjacent sides of the plates of the different sets, are in contact with all the side on its surface.

There can also be hexagonal plates, such as it is shown in Figure 2. In this case, since the different plates of the two sets (1, 2) are joined by a crossbar that passes by two of the vertices of the plates, there are spaces between the plates. To eliminate them, there is a jointed means (4) arranged between each of the holes created in the union of the two sets (1, 2), this means (4) being preferably a rhomboid net or the like, as it can be seen in Figure 2. This rhomboid net not only improves the safety of ramp or ladder configuration, but it also serves as ramp in the ladder configuration, converting it into a simultaneous ramp-ladder.

In order to obtain ladders with lower steps, or to vary the slope of the ramp, has been designed, in the center of a plate, a transverse joint (5) in the middle of a plate, as shown in Figure 3, and it may be arranged in the number of every required plates.

In this preferred embodiment is obvious the fact that the ramp ladder, thanks to its characteristics and especially to its places of linkage, can be folded, facilitating its transport and storage. Similarly, it is obvious the fact that without the aforementioned joints the ramp ladder is fixed, without the possibility of being folded.

A way to obtain this fixed ramp ladder would be through a flexible rhomboid net, so that the area of the plates would be immobilized, only being joined the area of the holes, in this case, occupied by the net, and once the structure has been adjusted to the unevenness, it is fixed completely. This obtained structure is similar to the previous one, so that the only difference is that this is fixed and the previous one can be folded.

## Claims

1. Adjustable ramp ladder with alternating steps, **characterized by** comprising at least
a first set (1) comprising a plurality of in line plates (11, 12, 13), said plates (11, 12, 13) being joined by the adjacent sides thereof,
a second set (2) comprising a plurality of in line plates (21, 22, 23), said plates (21, 22, 23) being joined by the adjacent sides thereof,
so that the sets (1, 2) are joined in parallel, by transverse cylindrical bars (3, 3', 3"), that intersect the internal mid-point of each of the plates (11-21, 12-22 and 13-23) by their ends, and which allow the linkage of each set (1, 2).

2. Adjustable ramp ladder with alternating steps, according to claim 1, **characterized in that** all the plates (11, 12, 13, 21, 22, 23) are the same shape and size.

3. Adjustable ramp ladder with alternating steps, according to the preceding claims, **characterized in that** the base shape of every plate (11, 12, 13, 21, 22, 23) is a regular polygon.

4. Adjustable ramp ladder with alternating steps, according to the preceding claims, **characterized in that** the base shape of every plate (11, 12, 13, 21, 22, 23) is quadrangular.

5. Adjustable ramp ladder with alternating steps, according to claims 1 to 3, **characterized in that** the base shape of every plate (11, 12, 13, 21, 22, 23) is hexagonal.

6. Adjustable ramp ladder with alternating steps, according to claims 1 to 3 and 5, **characterized in that** a jointed means (4) is arranged between each of gaps created in the union of the two sets (1, 2), this means (4) preferably being a rhomboid net or the like, such that its use as a ramp and ladder is allowed simultaneously.

7. Adjustable ramp ladder with alternating steps, according to the preceding claims, **characterized in that** each plate has a joint (5) in the transverse half of its surface, in such a way that it allows the variation of step height and the slope of the ramp.
